# EUROPÄISCHE PATENTSCHRIFT

(11) **EP 3 337 722 B1**
(45) Veröffentlichungstag und Bekanntmachung des Hinweises auf die Patenterteilung: **18.12.2024**
(21) Anmeldenummer: 16760020.4
(22) Anmeldetag: 25.08.2016
(51) Int. Cl.: B62M 6/45, B62M 6/50, B62M 6/55, B62K 19/30, B62K 23/02, B62K 23/06

(54) **ANZEIGEEINHEIT UND ELEKTROFAHRRAD**
DISPLAY UNIT AND ELECTRIC BICYCLE
UNITÉ D'AFFICHAGE ET VÉLO ÉLECTRIQUE

(30) Priorität: 25.08.2015 DE 102015216188; 25.08.2015 DE 102015216178; 25.08.2015 DE 102015216186
(43) Veröffentlichungstag der Anmeldung: 27.06.2018
(73) Patentinhaber: Biketec GmbH, 4950 Huttwil (CH)
(72) Erfinder: DURDEVIC, Ivica, 4950 Huttwil (CH); STUDER, Lukas Beat, 4623 Neuendorf (CH); SUTER, Philipp Walter, 6032 Emmen (CH); LANZ, Simon, 4955 Gondiswil (CH); WOODTLI, Robin, 4500 Solothurn (CH); WOELK, Timo, 83730 Fischbachau (DE); AFZAL, Omar, 81379 Muenchen (DE)
(74) Vertreter: Isarpatent
(86) Internationale Anmeldenummer: PCT/EP2016/070082
(87) Internationale Veröffentlichungsnummer: WO 2017/032833

(56) Entgegenhaltungen:
- DE-U1- 202007 019 659
- JP-A- 2015 044 463
- TW-A- 201 524 838
- US-A1- 2001 039 850
- US-A1- 2012 221 205
- US-B1- 6 584 872

## Beschreibung

Die vorliegende Erfindung betrifft eine Anzeigeeinheit gemäß dem Oberbegriff des Anspruchs 1 sowie ein Elektrofahrrad gemäß dem Oberbegriff des Anspruchs 9.

Elektrofahrräder, beispielsweise Pedelecs oder E-Bikes, erfreuen sich als leicht zu handhabendes, emissionsfreies Fortbewegungsmittel großer Beliebtheit. Für unterschiedliche Einsatzfelder sind besonders geeignete Fahrradtypen verfügbar. Hierzu gehören u.a. für den Freizeiteinsatz oder den Weg zur Arbeit auf der Straße oder im leichten Gelände optimierte Fahrräder (bspw. Citybikes oder Tourenbikes) und die für den Einsatz im Gelände und speziell auch bergigem Gelände entwickelten E-Mountainbikes (E-MTB) in verschiedenen Ausführungen. Elektrofahrräder bieten die Möglichkeit ohne Überbeanspruchung des Fahrers den Einsatzradius zu vergrößern und die durchschnittliche Fahrgeschwindigkeit zu erhöhen.

Aus dem Stand der Technik sind Elektrofahrräder bekannt, welche neben einer Antriebseinheit und einer Batterieeinheit auch eine Anzeigeeinheit und eine Fernbedienungseinheit (engl. Remote) für die Anzeigeeinheit aufweisen. Nachteilig bei derartigen Anzeigeeinheiten ist, dass diese lediglich in einer Montageposition am Lenker des Fahrrads montierbar sind. Die Anzeigeeinheiten sind daher nicht an unterschiedliche Fahrradgeometrien und Fahrerwünsche anpassbar. Ein modulares Konzept mit an unterschiedliche Fahrradtypen montierbaren Anzeigeeinheiten ist daher nicht möglich, da jeweils geänderte Befestigungen erforderlich sind. JP2015044463 zeigt eine Anzeigeeinheit mit den Merkmalen der Präambel des Anspruchs 1.

Der Erfindung liegt daher die Aufgabe zugrunde, eine neuartige Anzeigeeinheit bereitzustellen, welche elektrisch unterstützte Mobilität mit den Ansprüchen sportlich und Lifestyle-orientierter Radfahrer in Übereinstimmung bringt.

Diese Aufgabe wird durch eine Anzeigeeinheit mit der Merkmalskombination des Anspruchs 1 sowie durch ein Elektrofahrrad gemäß dem Anspruch 9 gelöst.

Eine erfindungsgemäße Anzeigeeinheit für ein Elektrofahrrad ist mittels einer Halteanordnung an dem Lenker des Fahrrads befestigt. Erfindungsgemäß ist die Anzeigeeinheit mittels der Halteanordnung wahlweise in einer dem Fahrer näheren, bzw. weiter zugewandten, ersten Montageposition (sog. Kompakt-Position) und einer vom Fahrer weiter entfernten zweiten Montageposition (sog. Komfort-Position) montierbar. Die Anzeigeeinheit ist daher modular an unterschiedliche Fahrradtypen montierbar. Eine Anpassung an Fahrerwünsche ist ohne weitere Befestigungselemente möglich. Eine Anpassung an unterschiedliche Sitzhaltungen und Lenkerformen ist insbesondere möglich. Die erste Montageposition ermöglicht eine kompakte Fahrradgestaltung da die Gesamtlänge minimiert ist. Die Anzeigeeinheit wird vorzugsweise bei der Montage des Fahrrads wie gewünscht in der ersten oder der zweiten Montageposition am Fahrrad angebracht. Vorzugsweise ist die Anzeigeeinheit nicht vom Fahrer abnehmbar.

Bei einer erfindungsgemäße Anzeigeeinheit ist die Halteanordnung für die erste Montageposition relativ zu einer Anordnung für die zweite Montageposition gedreht an der Anzeigeeinheit montierbar.

Erfindungsgemäß ist die Halteanordnung mit zwei parallel angeordneten Haltewangen versehen, welche den Lenker zumindest abschnittsweise umgreifen.

Erfindungsgemäß ist eine Haltewange links vom Lenkervorbau und eine Haltewange rechts vom Lenkervorbau angeordnet. Dadurch wird eine kompakte und hochfeste Montage der Anzeigeeinheit erreicht.

Die Haltewangen erstrecken sich angewinkelt zu der Anzeigeeinheit. Dadurch wird bei einer gedrehten Montage die erste oder wahlweise zweite Montageposition erreicht.

Erfindungsgemäß sind die Haltewangen seitlich an der Anzeigeeinheit befestigt. Erfindungsgemäß sind die Haltewangen mittels Schrauben seitlich fixiert. Die Wahl der Montageposition erfolgt daher durch die Seitenwahl der Haltewangen.

Die Anzeigeeinheit weist vorzugsweise ein breitformatig angeordnetes, etwa rechteckiges Gehäuse auf. Die dem Fahrer zugewandte Gehäuseoberseite ist im Randbereich insbesondere facettiert mit Schrägflächen versehen.

Als vorteilhaft hat es sich erwiesen, wenn die Anzeigeeinheit ein breitformatig angeordnetes, etwa rechteckiges Display aufweist. Das Display erstreckt sich vorzugsweise bis in den Randbereich des Gehäuses, wobei lediglich ein schmaler Rand vorgesehen ist. Dadurch sind eine bestmögliche Ausnutzung der Anzeigefläche und damit eine sehr gute Informationsmöglichkeit für den Fahrer gegeben.

Unterhalb des Displays kann etwa mittig ein dem Fahrer zugewandter Ein/Aus-Tastschalter vorgesehen sein. Der Schalter ist vorzugsweise breitformatig angeordnet und etwa rechteckig. Zur Erleichterung der Bedienung kann der Rand des Schalters beleuchtet sein. Die dem Fahrer zugewandte Gehäuseoberseite ist vorzugsweise facettiert mit Schrägflächen versehen, so dass auch der Schalter ergonomisch zum Fahrer geneigt ist.

Erfindungsgemäß kann auf der dem Fahrer zugewandten Seite der Anzeigeeinheit zumindest ein elektrischer Anschluss, insbesondere ein USB-Anschluss, vorgesehen sein. Der Anschluss ist in einer Zugangsöffnung des Gehäuses angeordnet. Die Zugangsöffnung ist mittels einer Abdeckung, insbesondere einem nach unten zu öffnenden Gummideckel, verschließbar. Besonders bevorzugt wird eine Standard-USB-Buchse, so dass anders wie bei Mini-Anschlüssen kein Adapter notwendig ist.

Bei einem besonders bevorzugten Ausführungsbeispiel der Anzeigeeinheit sind die Leitungsanschlüsse, vorzugswiese alle Leitungsanschlüsse (Kabelausgänge), auf einer vorm Fahrer abgewandten Seite vorgesehen. Die Leitungsanschlüsse sind hierbei auf der vom Fahrer abgewandten Seite der Anzeigeeinheit angeordnet. Vorzugsweise sind die Leitungsanschlüsse als Anschlussbuchsen ausgebildet. Vorzugsweise sind alle Kabel steckbar, beispielsweise über HIGO-Stecker.

Die Leitungsanschlüsse sind vorzugsweise abgewinkelt derart angeordnet, dass sich diese gewinkelt schräg nach vorne erstrecken. Dadurch sind die Leitungsanschlüsse gegenüber herkömmlichen, sich lediglich nach unten oder vorne erstreckenden Anschlüssen zur Steckermontage gut zugänglich und der zur Verfügung stehende Montageplatz wird bestmöglich ausgenutzt.

Zur Bedienung der Anzeigeeinheit ist vorzugsweise eine Fernbedienungseinheit (Remote) vorgesehen, welche im Bereich eines Lenkergriffes entfernt von der Anzeigeeinheit ergonomisch angeordnet ist.

Die Fernbedienungseinheit weist bei einem besonders bevorzugten Ausführungsbeispiel der Erfindung Unterstützungswahltasten für die Wahl der Unterstützungsstufe sowie zumindest ein Eingabegerät zur Menü-Navigation und Auswahl von auf der Anzeigeeinheit dargestellten Menüpunkten auf.

Als besonders vorteilhaft hat es sich erwiesen, wenn Eingabegerät und Unterstützungswahltasten entlang einer gemeinsamen Linie angeordnet sind. Die gemeinsame Linie kann ergonomisch bogenförmig mehrdimensional gekrümmt sein.

Das Eingabegerät und die Tasten sind vorzugsweise untereinander derart angeordnet, dass diese mit dem Daumen des Fahrers ergonomisch bedienbar sind. Ein sicherheitskritisches Umgreifen des Fahrers ist zur Bedienung von Unterstützungswahltasten und Eingabegerät nicht erforderlich.

Bei einem besonders bevorzugten Ausführungsbeispiel der Erfindung ist das Eingabegerät als Joystick ausgebildet. Die Menü-Navigation und Auswahl von auf der Anzeigeeinheit dargestellten Menüpunkten kann dadurch intuitiv und ergonomisch bevorzugt mit dem Daumen des Fahrers erfolgen.

Der Joystick ist vorzugsweise in alle vier Richtungen beweglich (nach oben und unten; nach links und rechts), wobei die Auswahl/Selektion von Menüpunkten mittels Druck auf den Joystick erfolgt (Druckfunktion). Die Menü-Navigation und Auswahl der Menüpunkte erfolgt mit dem multifunktionalen Joystick, so dass keine weiteren Bedienelemente erforderlich sind. Die Fernbedienungseinheit ist dadurch äußerst kompakt und ästhetisch ansprechend ausgebildet. Der Joystick kann ein hinterleuchtetes Symbol, insbesondere ein Rechteck mit abgerundeten Ecken aufweisen.

Als besonders vorteilhaft hat es sich erwiesen, wenn die Unterstützungswahltasten zueinander geneigt angeordnet sind. Die Wahl der Unterstützungsstufe kann hierbei ergonomisch mit dem Daumen des Fahrers erfolgen. Die Unterstützungswahltasten bilden vorzugsweise einen konkaven Abschnitt aus. Der Daumen kann zwischen den übereinander angeordneten Tasten ruhen, so dass die Betätigung intuitiv erfolgt, wobei die Unterstützungswahltaste zur Erhöhung der Unterstützungsstufe vorzugsweise in Fahrtrichtung vorne und die Unterstützungswahltaste zur Verringerung der Unterstützungsstufe in Fahrtrichtung hinten angeordnet ist.

Weiterhin wird es bevorzugt, wenn die Unterstützungswahltasten in Richtung der Hand des Fahrers geneigt angeordnet sind. Die Bedienung kann ergonomisch bevorzugt mit dem Daumen des Fahrers erfolgen.

Die Unterstützungswahltaste zur Erhöhung der Unterstützungsstufe ist vorzugsweise mit einem Plus-Symbol und die Unterstützungswahltaste zur Verringerung der Unterstützungsstufe mit einem Minus-Symbol gekennzeichnet. Die Symbole sind vorzugsweise hinterleuchtet und dadurch auch bei schlechten Sichtverhältnissen erkennbar.

Als fertigungstechnisch und für die Bedienung vorteilhaft hat es sich erwiesen, wenn die Unterstützungswahltasten einen freien, der Hand des Fahrers zugewandten Betätigungsabschnitt sowie einen elastisch gelagerten Endabschnitt aufweisen.

Gemäß einer bevorzugten Ausführungsform der Erfindung ist ein Lichtschalter im Bereich zwischen den Unterstützungswahltasten seitlich versetzt angeordnet. Vorzugsweise ist der Lichtschalter in Richtung entfernt von der Hand des Fahrers neben den Unterstützungswahltasten angeordnet. Als besonders ergonomisch hat es sich erwiesen, wenn der Lichtschalter mittig zwischen den Unterstützungswahltasten seitlich versetzt angeordnet ist.

Der Lichtschalter weist bevorzugt drei Funktionen auf, welche jeweils durch Tastendruck sequentiell aktiviert werden: Taste gedrückt halten (>2s) Licht ein/aus; Tastendruck Abblendlicht, zweiter Tastendruck Licht aufblenden. Vorteil daher eine Taste für Light On/Low/High/Off. Der Lichtschalter kann ein hinterleuchtetes Lichtsymbol aufweisen.

Bei Elektrofahrrädern mit einer elektronischen Schaltung des Motorgetriebes weist die Fernbedienungseinheit vorzugsweise eine mittig entlang einer Schwenkachse gelagerte Schaltwippe zur Gangwahl auf. Erfindungsgemäß vorteilhaft ist es, wenn die Schaltwippe zwei Betätigungsflächen aufweist, wobei eine erste Betätigungsfläche auf der dem Fahrer zugewandten Seite und eine zweite Betätigungsfläche auf der dem Fahrer abgewandten Seite angeordnet ist. Eingabegerät, Unterstützungswahltasten und Schaltwippe sind vorzugsweise entlang einer gemeinsamen Linie angeordnet. Die Tasten sind vorzugsweise untereinander derart angeordnet, dass diese mit dem Daumen des Fahrers ergonomisch bedienbar sind. Ein sicherheitskritisches Umgreifen des Fahrers ist zur Bedienung von Unterstützungswahltasten, Eingabegerät und Schaltwippe nicht erforderlich.

Bei einer bevorzugten Ausführungsform der Fernbedienungseinheit hat diese ein Oberteil und ein modular auswechselbaren Unterteil, wobei die Schaltwippe dem Unterteil zugeordnet ist. Die Fernbedienungseinheit ist daher modular an Fahrräder mit und ohne elektrisches Motorgetriebe anpassbar. Hierzu wird ein als Schellenhälfte ausgebildete Unterteil mit bzw. ohne Schaltwippe montiert. Oberteil und Unterteil sind vorzugsweise elektrisch mittels eines Flexbands verbunden.

Die Schaltwippe hat vorzugsweise eine etwa mittig angeordnete Automatik-Taste. Die Automatik-Taste wippt bevorzugt nicht mit und aktiviert die automatische Gangwahl, beispielsweise erster Gang und zweiter Gang.

In Richtung der Lenkergriffachse betrachtet verlaufen Eingabegerät, Unterstützungswahltasten und Schaltwippe vorzugsweise entlang einer konvex bogenförmigen gemeinsamen Linie, deren Krümmungsverlauf ergonomisch an den Bewegungsbereich des Fahrerdaumens angepasst ist.

Die Fernbedienungseinheit hat vorzugsweise einen Vibrationsmotor. Beispielsweise kann mittels einer kurzen Vibration das Erreichen der höchsten Unterstützungsstufe signalisiert werden. Ferner kann mittels einer kurzen Vibration ein Schaltvorgang vorgeschlagen werden. Vorzugsweise erfolgt ein Gangvorschlag auf der Anzeigeeinheit, bspw. Pfeil nach oben auf Display als Vorschlag hochzuschalten, wobei die Vibration den Fahrer aufmerksam macht, dass die Anzeigeeinheit eine neue Information zeigt.

Die Erfindung kann universell bei allen Typen von Fahrrädern, insbesondere bei Mountainbikes (sowohl in Hardtail- oder Full-Suspension-Bauweise), aber auch bei anderen Fahrrädern, bspw. Straßenrad-Rahmen realisiert werden und somit letztlich ein Touren-, City- oder Cross-Rad oder andere moderne Fahrradtypen ergeben. Sie ermöglicht aufgrund der kompakten, formschönen Bauweise den Aufbau von Rädern, die weitgehend die Vorzüge eines klassischen Fahrrads und eines Elektrofahrrads in sich vereinen.

Weitere bevorzugte Ausführungsformen sind Gegenstand der Unteransprüche.

Im Folgenden wird eine bevorzugte Ausführungsform der vorliegenden Erfindung unter Bezugnahme auf die beiliegenden Zeichnungen näher erläutert. Dabei zeigen die Zeichnungen im Einzelnen:
Figur 1 eine Seitenansicht eines erfindungsgemäßen Elektrofahrrads,
Figur 2 eine Detaildarstellung des Elektrofahrrads 1 aus Figur 1 im Bereich des Fahrradlenkers,
Figur 3 eine Seitenansicht der Anzeigeeinheit in einer erste Montageposition,
Figur 4 eine Seitenansicht der Anzeigeeinheit in einer zweiten Montageposition,
Figur 5 eine Detaildarstellung der montierten Anzeigeeinheit,
Figur 6 eine zweite Detaildarstellung der montierten Anzeigeeinheit,
Figur 7 eine weitere Detaildarstellung der montierten Anzeigeeinheit und
Figur 8 eine Draufsicht der montierten Anzeigeeinheit.

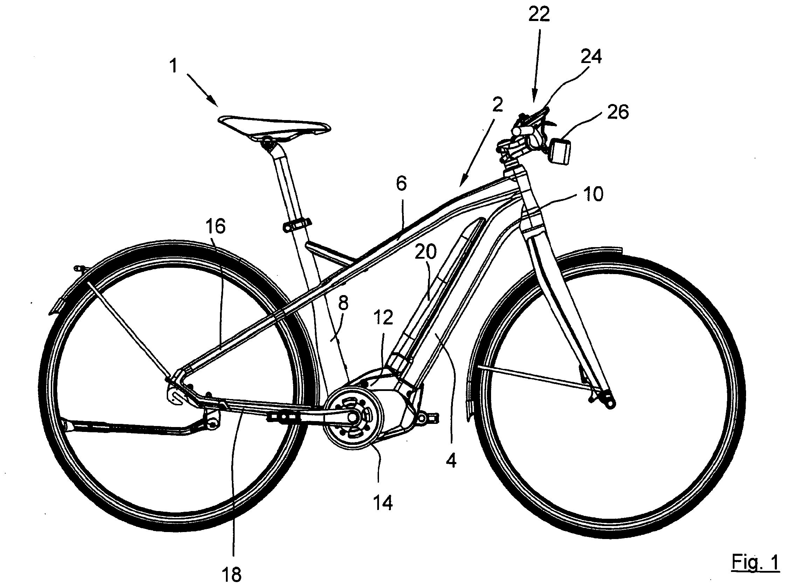

Figur 1 zeigt eine Seitenansicht eines erfindungsgemäßen Elektrofahrrads 1 mit einem exemplarisch als Diamantrahmen ausgebildeten Fahrradrahmen 2 mit einem Unterrohr 4, einem Oberrohr 6, einem Sitzrohr 8, einem Steuerrohr 10, einem Antriebsträger 12 für eine Antriebseinheit 14 sowie Sattelstreben 16 und Unterstreben 18 sowie eine Batterieeinheit 20.

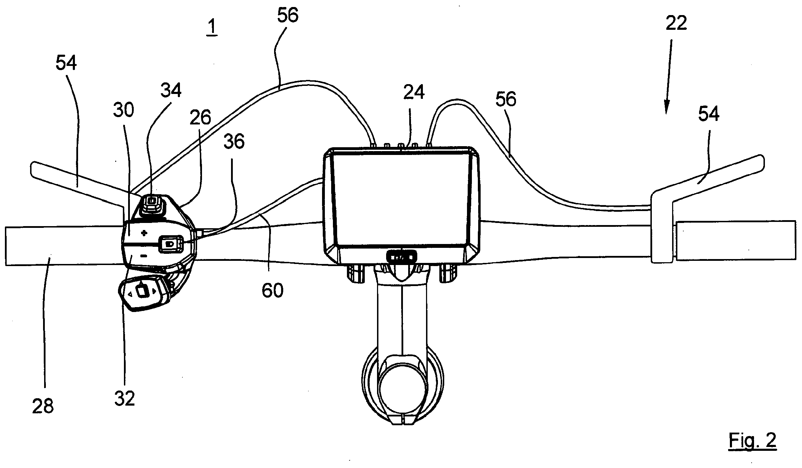

Wie insbesondere Figur 2 zu entnehmen ist, welche eine Detaildarstellung des Elektrofahrrads 1 aus Figur 1 im Bereich des Fahrradlenkers 22 zeigt, ist eine mittig auf dem Lenker 22 angeordnete Anzeigeeinheit 24 und eine Fernbedienungseinheit 26 vorgesehen. Die Fernbedienungseinheit 26 ist im Bereich eines linken Lenkergriffes 28 entfernt von der Anzeigeeinheit 24 angeordnet und weist zwei Unterstützungswahltasten 30, 32 für die Wahl der Motor-Unterstützungsstufe sowie ein als Joystick 34 ausgebildetes Eingabegerät zur Menü-Navigation und Auswahl von auf der Anzeigeeinheit 24 dargestellten Menüpunkten auf. Ferner hat die Fernbedienungseinheit 26 einen Lichtschalter 36.

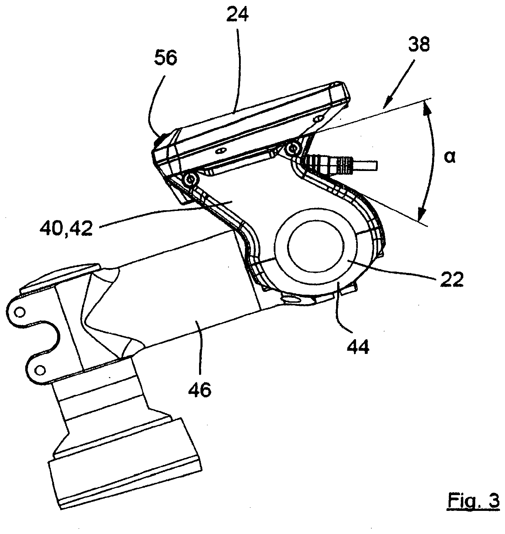

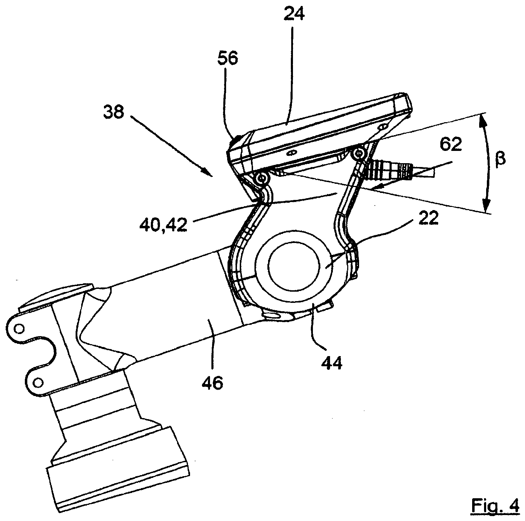

Wie insbesondere in den Figuren 3 und 4 dargestellt ist, welche Seitenansichten der Anzeigeeinheit 24 am Lenker 22 zeigen, ist die Anzeigeeinheit 24 mittels einer Halteanordnung 38 an dem Lenker 22 des Fahrrads befestigt. Die Anzeigeeinheit ist mittels der Halteanordnung wahlweise gemäß Figur 3 in einer dem Fahrer näheren (zugewandten) ersten Montageposition (Kompakt-Position) oder einer vom Fahrer weiter entfernten zweiten Montageposition (Komfort-Position) gemäß Figur 4 montierbar. Die Halteanordnung für die erste Montageposition ist hierzu relativ zu einer Anordnung für die zweite Montageposition gedreht montierbar. Die Anzeigeeinheit ist daher modular an unterschiedliche Fahrradtypen befestigbar. Eine Anpassung an Fahrerwünsche ist ohne weitere Befestigungselemente möglich. Eine Anpassung an unterschiedliche Sitzhaltungen und Lenkerformen ist möglich. Die Anzeigeeinheit 24 wird bei der Montage des Fahrrads wie gewünscht in der ersten oder der zweiten Montageposition am Fahrrad angebracht.

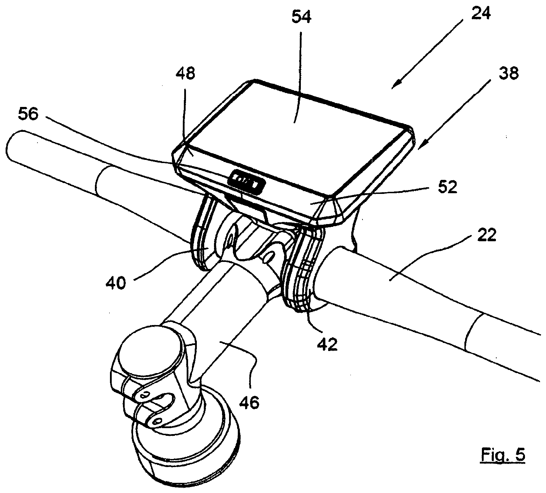

Als besonderes vorteilhaft hat es sich gemäß Figur der Figuren 5 bis 8 erwiesen, welche Detaildarstellungen der montierten Anzeigeeinheit 24 zeigen, wenn die Halteanordnung 38 zwei parallel angeordneten Haltewangen 40, 42 aufweist, welche den Lenker 22 mit einem ersten Befestigungsabschnitt manschettenartig umgreifen und mittels Spannschrauben 44 an diesem fixierbar sind. Die Haltewangen 40, 42 erstrecken sich angewinkelt zu der Anzeigeeinheit 24 mit einem Winkel α im Bereich von etwa 30° bis 60°, vorzugsweise etwa 45°. Die Befestigungsabschnitte sind im Wesentlichen rund und ringförmig ausgebildet. Eine Haltewange 40 ist links vom Lenkervorbau 46 und eine Haltewange 42 rechts vom Lenkervorbau 46 fixiert. Dadurch wird eine kompakte, modulare Montage der Anzeigeeinheit 24 erreicht.

Die Haltewangen 40, 42 sind seitlich an die Anzeigeeinheit 24 angesetzt und mittels Schrauben (nicht dargestellt) seitlich fixiert. Die Wahl der Montageposition erfolgt durch die Seitenwahl der Haltewangen 40, 42.

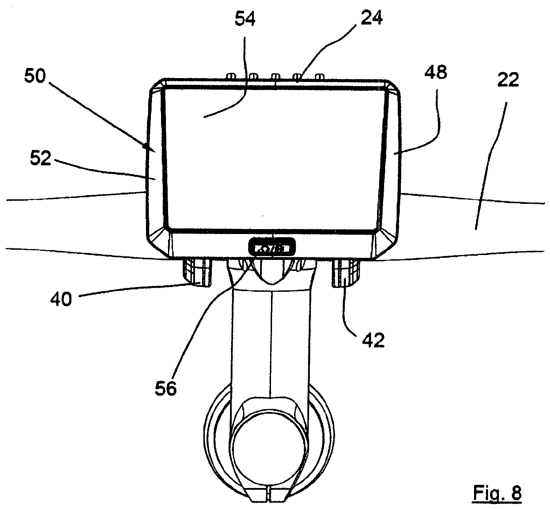

Gemäß Figur 8 weist die Anzeigeeinheit 24 ein breitformatig angeordnetes, etwa rechteckiges Gehäuse 48 auf. Die dem Fahrer zugewandte Gehäuseoberseite 50 ist facettiert mit umlaufenden Schrägflächen 52 versehen. Der Schrägflächenverlauf 52 ist auf der dem Fahrer zugewandten Seite breiter wie an den Seiten der Anzeigeeinheit 24, welche breiter sind wie die auf der vom Fahrer abgewandten Seite. Die Anzeigeeinheit 24 hat ein breitformatig mittig angeordnetes rechteckiges Display 54. Das Display 54 erstreckt sich bis in den facettierten Randbereich des Gehäuses 48, wobei lediglich ein relativ schmaler Rand vorgesehen ist. Dadurch ist eine bestmögliche Ausnutzung der Anzeigefläche und damit eine sehr gute Informationsmöglichkeit für den Fahrer gegeben.

Unterhalb des Displays ist etwa mittig ein dem Fahrer zugewandter Ein/Aus-Tastschalter 56 vorgesehen sein. Der Schalter 56 ist breitformatig etwa rechteckig. Zur Erleichterung der Bedienung ist der Rand des Schalters 56 hinterleuchtet. Die dem Fahrer zugewandte Gehäuseoberseite 50 ist facettiert mit Schrägflächen derart versehen, dass der Schalter 56 ergonomisch zum Fahrer geneigt ist.

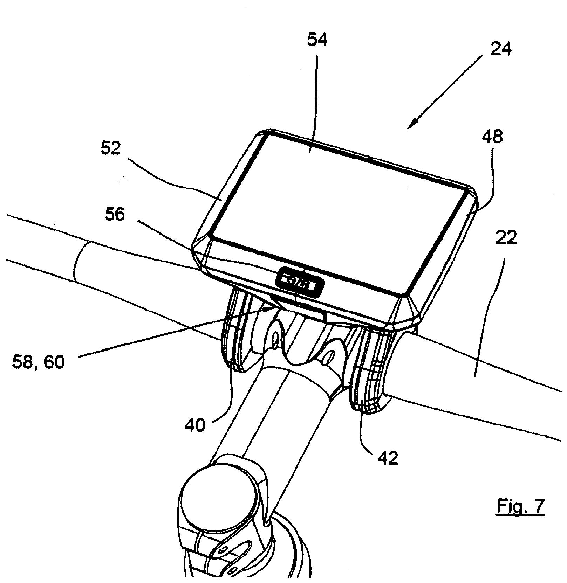

Auf der dem Fahrer zugewandten Seite der Anzeigeeinheit 24 ist mittig ein als Standard-USB-Anschluss ausgebildeter elektrischer Anschluss vorgesehen (siehe Figur 7). Der Anschluss ist in einer Zugangsöffnung 58 angeordnet. Die Zugangsöffnung 58 ist mittels einer als nach unten zu öffnendem Gummideckel ausgebildeter, verschließbarer Abdeckung 60 verdeckt.

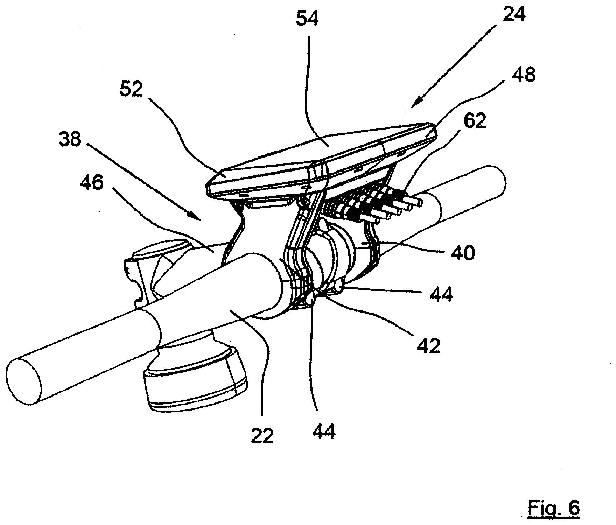

Wie insbesondere den Figuren 4 und 6 zu entnehmen ist, sind alle Leitungsanschlüsse 62 der Anzeigeeinheit 24 auf einer vorm Fahrer abgewandten Seite vorgesehen. Die Leitungsanschlüsse 62 sind als Anschlussbuchsen ausgebildet. Alle Kabel sind steckbar, beispielsweise über HIGO-Stecker. Die Leitungsanschlüsse 62 sind abgewinkelt derart angeordnet, dass sich diese gewinkelt schräg nach vorne erstrecken. Der bevorzugte Winkelbereich umfasst hierbei einen Winkel β im Bereich von etwa 10 bis 60° vorzugsweise von etwa 30°. Dadurch sind die Leitungsanschlüsse 62 gegenüber herkömmlichen, sich lediglich nach unten oder vorne erstreckenden Anschlüssen zur Steckermontage gut zugänglich und der zur Verfügung stehende Montageplatz wird bestmöglich ausgenutzt.

Die Erfindung kann universell bei allen Typen von Fahrrädern, insbesondere bei Mountainbikes (sowohl in Hardtail- oder Full-Suspension-Bauweise), aber auch bei anderen Fahrrädern, bspw. Straßenrad-Rahmen realisiert werden und somit letztlich ein Touren-, City- oder Cross-Rad oder andere moderne Fahrradtypen ergeben. Sie ermöglicht aufgrund der kompakten, formschönen Bauweise den Aufbau von Rädern, die weitgehend die Vorzüge eines klassischen Fahrrads und eines Elektrofahrrads in sich vereinen.

Die Ausführung der Erfindung ist nicht auf die in den Figuren gezeigten und oben erläuterten Beispiele beschränkt, sondern ebenso in einer Vielzahl von Abwandlungen eines Fachmanns möglich.

Offenbart ist eine Anzeigeeinheit 24 für ein Elektrofahrrad 1, wobei die Anzeigeeinheit 24 mittels einer Halteanordnung 38 an dem Lenker 22 des Fahrrads 1 befestigt ist. Erfindungsgemäß ist die Anzeigeeinheit 24 mittels der Halteanordnung 38 wahlweise in einer dem Fahrer näheren ersten Montageposition und einer vom Fahrer weiter entfernten zweiten Montageposition montierbar. Offenbart ist ferner ein Elektrofahrrad 1 mit einer derartigen Anzeigeeinheit 24.

### Bezugszeichenliste

- 1: Elektrofahrrad
- 2: Fahrradrahmen
- 4: Unterrohr
- 6: Oberrohr
- 8: Sitzrohr
- 10: Steuerrohr
- 12: Antriebsträger
- 14: Antriebseinheit
- 16: Sattelstrebe
- 18: Unterstrebe
- 20: Batterieeinheit
- 22: Lenker
- 24: Anzeigeeinheit
- 26: Fernbedienungseinheit
- 28: linker Lenkergriff
- 30: Unterstützungswahltaste
- 32: Unterstützungswahltaste
- 34: Joystick
- 36: Lichtschalter
- 38: Halteanordnung
- 40: Haltewange
- 42: Haltewange
- 44: Spannschraube
- 46: Lenkervorbau
- 48: Gehäuse
- 50: Gehäuseoberseite
- 52: Schrägfläche
- 54: Display
- 56: Ein/Aus-Tastschalter
- 58: Zugangsöffnung
- 60: Abdeckung
- 62: Leitungsanschlüsse

## Patentansprüche

1. Anzeigeeinheit für ein Elektrofahrrad, wobei die Anzeigeeinheit (24) eine Halteanordnung (8) aufweist und die Halteanordnung zwei parallel angeordneten Haltewangen (40, 42) aufweist und mittels der Halteanordnung (38) an dem Lenker (22) des Fahrrads (1) wahlweise in einer dem Fahrer näheren ersten Montageposition oder einer vom Fahrer weiter entfernten zweiten Montageposition montierbar ist, wobei die Halteanordnung (38) für die erste Montageposition relativ zu einer Anordnung für die zweite Montageposition gedreht montierbar ist, wobei eine Haltewange (40) links vom Lenkervorbau (46) und eine Haltewange (42) rechts vom Lenkervorbau (46) angeordnet ist, wobei die Haltewangen (40, 42) den Lenker (22) zumindest abschnittsweise umgreifen, **dadurch gekennzeichnet dass** die Haltewangen sich angewinkelt zu der Anzeigeeinheit (24) erstrecken und jeweils seitlich an der Anzeigeeinheit (24) mittels Schrauben seitlich fixiert sind, wobei die Wahl der Montageposition durch die Seitenwahl der Haltewangen (40, 42) erfolgt.

2. Anzeigeeinheit nach Anspruch 1, wobei die Anzeigeeinheit (24) ein breitformatig angeordnetes, etwa rechteckiges Gehäuse (48) aufweist.

3. Anzeigeeinheit nach einem der vorhergehenden Ansprüche, wobei die Anzeigeeinheit (24) ein breitformatig angeordnetes, etwa rechteckiges Display (54) aufweist.

4. Anzeigeeinheit nach Anspruch 3, wobei unterhalb des Displays (54) etwa mittig ein dem Fahrer zugewandter Ein/Aus-Schalter (56) vorgesehen ist.

5. Anzeigeeinheit nach einem der vorhergehenden Ansprüche, wobei auf der dem Fahrer zugewandten Seite der Anzeigeeinheit (24) zumindest ein elektrischer Anschluss, insbesondere ein USB-Anschluss, vorgesehen ist.

6. Anzeigeeinheit nach einem der vorhergehenden Ansprüche, wobei die Leitungsanschlüsse (62) der Anzeigeeinheit (24) auf einer vom Fahrer abgewandten Seite vorgesehen sind.

7. Anzeigeeinheit nach Anspruch 6, wobei die Leitungsanschlüsse (62) abgewinkelt derart angeordnet sind, dass sich diese gewinkelt schräg nach vorne erstrecken.

8. Anzeigeeinheit nach einem der vorhergehenden Ansprüche, wobei eine Fernbedienungseinheit (26) zur Bedienung der Anzeigeeinheit (24) vorgesehen ist, welche im Bereich eines Lenkergriffes (28) entfernt von der Anzeigeeinheit (24) angeordnet ist.

9. Elektrofahrrad mit einer Anzeigeeinheit (24) nach einem der vorhergehenden Ansprüche.

## Claims

1. Display unit for an electric bicycle, wherein the display unit (24) has a holding arrangement (8) and the holding arrangement has two holding plates (40, 42) arranged in parallel and can be mounted by means of the holding arrangement (38) on the handlebars (22) of the bicycle (1) either in a first mounting position closer to the rider or in a second mounting position further away from the rider, wherein the holding arrangement (38) for the first mounting position can be mounted rotated relative to an arrangement for the second mounting position,
wherein one holding plate (40) is arranged to the left of the handlebar stem (46) and one holding plate (42) is arranged to the right of the handlebar stem (46), wherein the holding plates (40, 42) engage around the handlebars (22) at least in sections, **characterised in that** the holding plates extend at an angle to the display unit (24) and are respectively fixed laterally to the display unit (24) by means of screws, wherein the mounting position is selected by the side selection of the holding plates (40, 42).

2. Display unit according to Claim 1, wherein the display unit (24) has an approximately rectangular housing (48) arranged in a wide format.

3. Display unit according to one of the preceding claims, wherein the display unit (24) has an approximately rectangular display (54) arranged in a wide format.

4. Display unit according to Claim 3, wherein an on/off switch (56) facing the rider is provided approximately centrally below the display (54).

5. Display unit according to one of the preceding claims, wherein at least one electrical connection, in particular a USB port, is provided on the side of the display unit (24) facing the rider.

6. Display unit according to one of the preceding claims, wherein the cable connections (62) of the display unit (24) are provided on the side facing away from the rider.

7. Display unit according to Claim 6, wherein the cable connections (62) are arranged at an angle in such a way that they extend diagonally forwards.

8. Display unit according to one of the preceding claims, wherein a remote control unit (26) is provided to operate the display unit (24) and is arranged in the region of a handlebar grip (28) away from the display unit (24).

9. Electric bicycle having a display unit (24) according to one of the preceding claims.

## Revendications

1. Unité d'affichage pour un vélo électrique, l'unité d'affichage (24) présentant un agencement de support (8) et l'agencement de support présentant deux joues de support (40, 42) disposées parallèlement, et pouvant être montée au moyen de l'agencement de support (38) sur le guidon (22) du vélo (1) sélectivement dans une première position de montage plus proche de l'utilisateur ou dans une deuxième position de montage plus éloignée de l'utilisateur, l'agencement de support (38) pour la première position de montage pouvant être monté en étant tourné par rapport à un agencement pour la deuxième position de montage, une joue de support (40) étant disposée à gauche de la potence de guidon (46) et une joue de support (42) étant disposée à droite de la potence de guidon (46), les joues de support (40, 42) entourant le guidon (22) au moins par sections, **caractérisée en ce que** les joues de support s'étendent en formant un angle par rapport à l'unité d'affichage (24) et sont chacune fixées latéralement à l'unité d'affichage (24) au moyen de vis, la sélection de la position de montage s'effectuant par la sélection du côté des joues de support (40, 42).

2. Unité d'affichage selon la revendication 1, dans laquelle l'unité d'affichage (24) présente un boîtier (48) approximativement, disposé en format large.

3. Unité d'affichage selon l'une des revendications précédentes, dans laquelle l'unité d'affichage (24) présente un écran (54) approximativement rectangulaire, disposé en format large.

4. Unité d'affichage selon la revendication 3, dans laquelle un interrupteur marche/arrêt (56) tourné vers l'utilisateur est prévu approximativement au centre sous l'écran (54).

5. Unité d'affichage selon l'une des revendications précédentes, dans laquelle au moins un raccordement électrique, en particulier un raccordement USB, est prévu du côté de l'unité d'affichage (24) tourné vers l'utilisateur.

6. Unité d'affichage selon l'une des revendications précédentes, dans laquelle les raccords de câbles (62) de l'unité d'affichage (24) sont prévus d'un côté opposé à l'utilisateur.

7. Unité d'affichage selon la revendication 6, dans laquelle les raccords de câbles (62) sont disposés de manière coudée de telle sorte qu'ils s'étendent en biais vers l'avant.

8. Unité d'affichage selon l'une des revendications précédentes, dans laquelle il est prévu une unité de télécommande (26) pour la commande de l'unité d'affichage (24), laquelle est disposée dans la zone d'une poignée de guidon (28) à distance de l'unité d'affichage (24).

9. Vélo électrique équipé d'une unité d'affichage (24) selon l'une des revendications précédentes.
